# EUROPEAN PATENT APPLICATION

(11) **EP 2 042 122 A1**
(43) Date of publication of application: **01.04.2009**
(21) Application number: 08016000.5
(22) Date of filing: 11.09.2008
(51) Int. Cl.: A61C 8/00

(54) **Dental implant abutment**

(30) Priority: 27.09.2007 JP 2007251802
(71) Applicant: GC Corporation, Itabashi-ku Tokyo 174-8585 (JP)
(72) Inventor: Oyama, Takaaki, Itabashi-ku Tokyo (JP); Sato, Fumiya, Itabashi-ku Tokyo (JP)
(74) Representative: Müller-Boré & Partner Patentanwälte

(57) **Abstract**

To provide a dental implant abutment which is attached on the oral cavity inner side of an implant fixture embedded in a jawbone to be an artificial tooth root and pierces a gingiva so as to be a base of an upper structural body in a dental implant treatment to recover a lost oral cavity function of a lost tooth, and which does not remarkably lose aesthetic property when a patient subjected to the dental implant treatment suffers a retraction of gingiva according to bone absorption, the dental implant abutment is made of a ceramic added with a pigment and sintered so as to wholly have a similar color to that of the gingiva, where the similar color to that of the gingiva has L* of 60 to 85, a* of 9 to 20, and b* of -5 to 9 in an index of a color system of L*a*b*.

## Description

The present invention relates to a dental implant abutment which is attached on the oral cavity inner side of an implant fixture embedded in a jawbone to be an artificial tooth root, and pierces a gingiva so as to be a base of an upper structural body, in a dental implant treatment to recover a lost oral cavity function of a lost tooth, and which does not remarkably lose aesthetic property even when a patient subjected to the dental implant treatment suffers gingival retraction according to bone absorption.

As a treatment to recover a lost oral cavity function of a lost tooth, a dental implant treatment has been widely used, to fix a dental prosthesis on the oral cavity inner side of an implant fixture which is embedded in a jawbone at a lost tooth and osseously bonded with the jawbone so as to be an artificial tooth root. As for the dental implant treatment, for example, Unexamined Japanese Patent Publication No. 07-80003, Unexamined Japanese Patent Publication No. 2003-325552, and U.S. Patent Publication No. 5674072 disclose a generally used conventional structure in which the dental implant abutment to pierce the gingiva is arranged on an oral cavity inner side of the implant fixture, and a dental prosthesis is arranged on the oral cavity inner side of the dental implant abutment.

However, in such the dental implant treatment, a patient subjected to the dental implant treatment suffers bone absorption with the passage of time, and then suffers gingival retraction according to the bone absorption. When the retraction of the gingiva occurs, a part at the oral cavity inner side of the dental implant abutment arranged on the oral cavity inner side of the implant fixture so as to pierce the gingiva is exposed.

However, a conventional dental implant abutment is formed with titanium or a titanium alloy because of considering bio-compatibility. Thus, when the part at the oral cavity inner side of the dental implant abutment is exposed, the metallic titanium or titanium alloy is seen at the oral cavity inner side of the gingiva. Therefore, aesthetic property is remarkably lost.

Further, according to recent progression of a dental CAD/CAM technique, a method to produce the dental implant abutment by cutting a ceramic block is widely used. However, this ceramic mainly includes zirconia, and thus have an approximately white color. Thus, when the part at the oral cavity inner side of the dental implant abutment is exposed, the ceramic having an approximately white color is seen at the oral cavity inner side of the gingiva. Therefore, aesthetic property is remarkably damaged.

When the lip side or cheek side of the dental implant abutment is exposed so as to remarkably damage aesthetic property, it is necessary to change the dental implant abutment to that having a low height, or cut the dental implant abutment and reproduce a prosthesis by collecting occlusion pattern again. However, these treatments are not preferable because corporal and financial burdens of a patient who suffers a retraction of gingiva are great.

Therefore, as a method to recover a bone-absorbed jawbone or a retracted gingiva, surgical treatments using a gingival transplant, an emdogain, GTR, and GBR were proposed. However, these treatments are not yet realistic, and a burden of a patient who suffers a retraction of gingiva is still great.

An objective of the present invention is to provide the dental implant abutment which does not lose aesthetic property even when a patient subjected to the dental implant treatment suffers gingival retraction according to bone absorption.

Present inventors carried out earnest works to solve the above-described problems and, as a result, they found out the followings to complete the present invention. The dental implant abutment is made of a ceramic which is added with a pigment and sintered so as to wholly have a similar color to that of the gingiva. Thereby, even when a patient subjected to the dental implant treatment suffers gingival retraction according to bone absorption so as to expose a part at the oral cavity inner side of the dental implant abutment, aesthetic property is not remarkably damaged because the exposed part has a similar color to that of the gingiva.

The present invention is the dental implant abutment which is attached on the oral cavity inner side of the implant fixture embedded in the jawbone to be an artificial tooth root, and pierces the gingiva so as to be a base of an upper structural body, wherein the dental implant abutment is made of a ceramic added with a pigment and sintered so as to wholly have a similar color to that of the gingiva.

The similar color to that of the gingiva has preferably L* of 60 to 85, a* of 9 to 20, and b* of -5 to 9 in an index of a color system of L*a*b*. The dental implant abutment has preferably a prosthesis fixing portion at the oral cavity inner side of a part which pierces the gingiva.

The dental implant abutment according to the present invention is attached on the oral cavity inner side of the implant fixture embedded in the jawbone to be the artificial tooth root, and pierces the gingiva so as to be a base of the upper structural body, and the dental implant abutment is made of a ceramic added with a pigment and sintered so as to wholly have a similar color to that of the gingiva. Thus, even when a patient subjected to the dental implant treatment suffers a retraction of the gingiva according to bone absorption so as to expose a part at the oral cavity inner side of the dental implant abutment, aesthetic property is not remarkably damaged because the exposed part has a similar color to that of the gingiva. As a result of this, frequencies of a reproduction of a prosthesis, a reoperation of the dental implant treatment, and a surgical treatment of the gingiva, which are carried out to recover aesthetic property, can be reduced.

Such the effect can be surely achieved when the similar color to that of the gingiva has L* of 60 to 85, a* of 9 to 20, and b* of -5 to 9 in the index of a color system of L*a*b*. Further, in a case that the dental implant abutment has a prosthesis fixing portion at the oral cavity inner side of a part which pierces the gingiva, when the dental implant abutment is produced by cutting a ceramic block by a dental CAD/CAM technique, a prosthesis fixing portion can be simultaneously produced together. Therefore, it is not necessary to separately prepare a member corresponding to the prosthesis fixing portion.

Fig. 1 is a perspective view of one example of the dental implant abutment according to the present invention.

Fig. 2 is an explanatory longitudinal sectional view to illustrate a state after completing the dental implant treatment using the dental implant abutment illustrated in Fig. 1.

Fig. 3 is a perspective view of another example of the dental implant abutment according to the present invention.

Fig. 4 is an explanatory longitudinal sectional view to illustrate a state after completing the dental implant treatment using the dental implant abutment illustrated in Fig. 3.

Fig. 5 is a perspective view of another example of the dental implant abutment according to the present invention.

Fig. 6 is a perspective view of another example of the dental implant abutment according to the present invention.

Fig. 7 is a perspective view of another example of the dental implant abutment according to the present invention.

The dental implant abutment according to the present invention will be described in detail below with reference to the drawings.

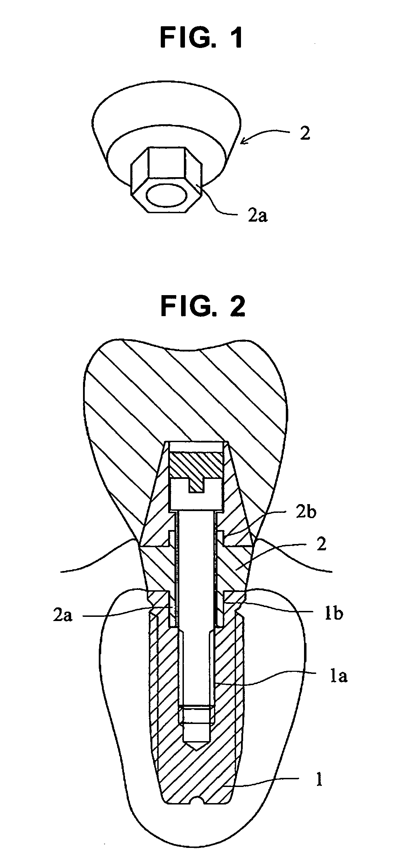

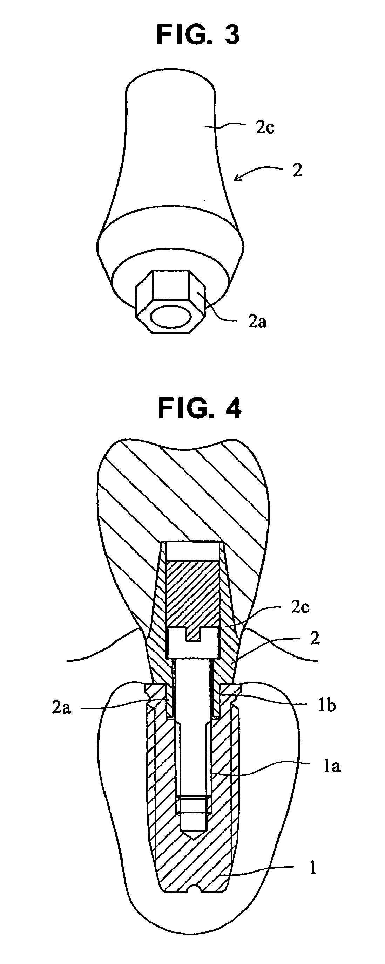

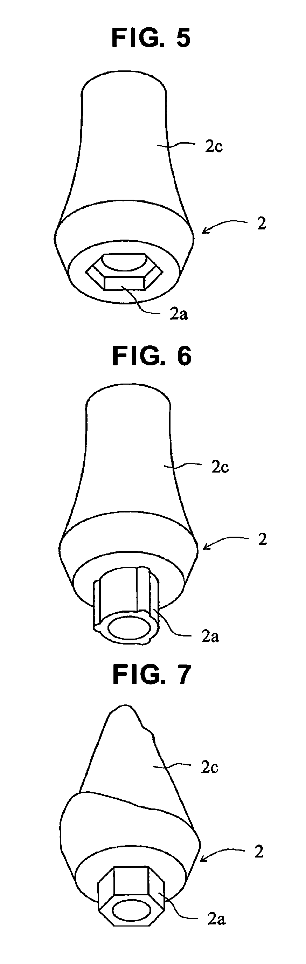

Fig. 1 is a perspective view of one example of the dental implant abutment according to the present invention. Fig. 2 is an explanatory longitudinal sectional view to illustrate a state after completing the dental implant treatment using the dental implant abutment illustrated in Fig. 1. Fig. 3 is a perspective view of another example of the dental implant abutment according to the present invention. Fig. 4 is an explanatory longitudinal sectional view to illustrate a state after completing the dental implant treatment using the dental implant abutment illustrated in Fig. 3. Fig. 5 is a perspective view of another example of the dental implant abutment according to the present invention. Fig. 6 is a perspective view of another example of the dental implant abutment according to the present invention. Fig. 7 is a perspective view of another example of the dental implant abutment according to the present invention.

The implant fixture 1 is embedded in the jawbone at a lost tooth, and osseously bonded with the jawbone so as to be the artificial tooth root, in the dental implant treatment to recover a lost oral cavity function of a lost tooth. The implant fixture 1 has an approximately cylindrical shape as illustrated in Unexamined Japanese Patent Publication No. 07-80003, or has an approximately cylindrical shape having a male screw provided on an outer periphery thereof as illustrated in Unexamined Japanese Patent Publication No. 2003-325552. The implant fixture 1 has a female screw 1a provided in the axial direction at the center thereof. The implant fixture 1 has an engagement part 1b at the oral cavity inner side thereof in order not to rotate the dental implant abutment 2 described below. When an engagement part 2a provided at the implant fixture 1 side of the dental implant abutment 2 has a prism shape such as a hexagon as illustrated in Figs. 1 and 3, the engagement part 1b is a recessed part having a cross sectional shape agreeing with the prism shape. When the engagement part 2a provided at the implant fixture 1 side of the dental implant abutment 2 has a recessed part having an angular cross sectional shape such as a hexagon as illustrated in Fig. 5, the engagement part 1b has a pillar shape agreeing with the angular recessed part. Further, when the engagement part 2a provided at the implant fixture 1 side of the dental implant abutment 2 has a shape having projections at predetermined intervals on an outer periphery of a pillar shape as illustrated in Fig. 6, the engagement part 1b has a cross sectional shape having recessions at predetermined intervals on an outer periphery of a circular shape. Furthermore, when the engagement part 1b has a pillar shape, it has a through hole communicating with the female screw 1a.

The dental implant abutment 2 according to the present invention is attached on the oral cavity inner side of the implant fixture 1, which is embedded in the jawbone so as to be the artificial tooth root, and pierces the gingiva so as to be a base of the upper structural body. The dental implant abutment 2 is made of a ceramic which is added with a pigment and sintered so as to wholly have a similar color to that of the gingiva. More particularly, the ceramic mainly includes zirconia, and is added with a pigment having a red color or both red and yellow colors and sintered so as to wholly have a similar color to that of the gingiva.

The dental implant abutment 2 has a prism shape such as a hexagon as illustrated in Figs. 1 and 3, an angular recessed part having a cross sectional shape such as a hexagon as illustrated in Fig. 5, or an engagement part 2a in a shape having projections at predetermined intervals on an outer periphery of a pillar shape as illustrated in Fig. 6, at the opposite side to the oral cavity inner side, in order to be engaged with the engagement part 1b provided on the oral cavity inner side of the implant fixture 1. Further, the dental implant abutment 2 has an oral cavity inner-side engagement part 2b engaged with a prosthesis forming member so as not to rotate at the oral cavity inner side thereof, as illustrated in Figs. 1 and 2 and Unexamined Japanese Patent Publication No. H07-80003, where the prosthesis forming member is constituted of a separate member from the dental implant abutment 2. Or, in another type, the dental implant abutment 2 is integrally formed with a prosthesis fixing part 2c on the oral cavity inner side of a part which pierces the gingiva, and this prosthesis fixing part 2c has an approximately frustum-shaped outer face, as illustrated in Figs. 3, 4, 5 and 6 and Unexamined Japanese Patent Publication No. 2003-325552. Or, in another type, the dental implant abutment 2 is integrally formed with a prosthesis fixing part 2c having a shape corresponding to a shape of a prosthesis to be produced, as illustrated in Fig. 7. Further, when the dental implant abutment 2 is attached by engaging the engagement part 2a on the oral cavity inner side of the implant fixture 1, the dental implant abutment 2 has a shape of expanding toward the oral cavity inner side from outer surface of the implant fixture 1 on an oral cavity inner side, as illustrated in Figs. 1 and 2, Unexamined Japanese Patent Publication No. 07-80003 and Unexamined Japanese Patent Publication No. 2003-325552, or has a shape of expanding toward the oral cavity inner side from a part more inner side than an outer periphery of an oral cavity inner-side end surface of the implant fixture 1 as illustrated Fig. 4 and U.S. Patent No. 5674072. Furthermore, the dental implant abutment 2 has an oral cavity inner-side end part having a plane shape in which the end part expands toward the oral cavity inner side from an oral cavity inner-side surface of the implant fixture 1, and this oral cavity inner-side end part has a plane shape, or, in another case, the dental implant abutment 2 has a scallop structure in which an interdental papilla side is projected more to the oral cavity inner side in consideration of an interdental papilla, as illustrated in Fig. 7.

### [Examples]

Examples and comparative examples of dental implant abutments have been produced by using a ceramic material which mainly includes zirconia and is added with only Pigment Red 231 or both Pigment Red 231 and Pigment Yellow 159, and sintering it, and by using a ceramic material which includes only zirconia without addition of a pigment and sintering it.

The results of L*, a* and b* in the index of the color system of L*a*b* of these dental implant abutments are obtained and shown in Table 1.

As a result, Examples 1 to 5 have L* of 60 to 85, a* of 9 to 20 and b* of -5 to 9 in the index of the color system of L*a*b*, and have similar colors to that of the gingiva, where by it is confirmed that aesthetic property is not remarkably damaged even when a patient subjected to the dental implant treatment suffers a retraction of gingiva according to bone absorption. However, Comparative examples 1 to 4 have a* of more than 9, in the index of color system of L*a*b*. Thus, these have hues close to red, and do not have similar colors to that of the gingiva. Further, since b* is more than 9, color saturations are close to yellow, and thus the colors are not similar to that of the gingiva. Comparative example 5 without a pigment being added has L* of 95 or more. Thus, the color of this example is close to white, and in this case, it is clear that aesthetic property is remarkably damaged when a patient subjected to the dental implant treatment suffers a retraction of gingiva according to bone absorption.

**[Table 1]**

| Examples | Color measurement result A: Properest B: Proper C: Improper | | | | | | |
|---|---|---|---|---|---|---|---|
| | Pigment (Color Index Generic Name) | Amount of Addition (wt%) | Measurement Conditions | L* | a* | b* | Effects |
| Example 1 | Pigment Red 231 | 0.50 | White Background | 75.5 | 12.2 | 1.2 | A |
| | Pigment Yellow 159 | - | Black Background | 74.8 | 12.0 | 0.6 | |
| Example 2 | Pigment Red 231 | 1.00 | White Background | 71.7 | 12.0 | 1.2 | A |
| | Pigment Yellow 159 | - | Black Background | 68.9 | 12.0 | -0.5 | |
| Example 3 | Pigment Red 231 | 2.00 | White Background | 69.2 | 11.8 | 0.8 | A |
| | Pigment Yellow 159 | - | Black Background | 66.3 | 12.8 | -1.0 | |
| Example 4 | Pigment Red 231 | 0.90 | White Background | 73.2 | 9.5 | 5.5 | A |
| | Pigment Yellow 159 | 0.10 | Black Background | 73.3 | 9.5 | 5.5 | |
| Example 5 | Pigment Red 231 | 0.80 | White Background | 73.6 | 9.1 | 7.0 | B |
| | Pigment Yellow 159 | 0.20 | Black Background | 73.2 | 9.1 | 6.7 | |
| Comparative example 1 | Pigment Red 231 | 0.67 | White Background | 74.2 | 7.8 | 9.6 | C |
| | Pigment Yellow 159 | 0.33 | Black Background | 73.9 | 7.6 | 9.4 | |
| Comparative example 2 | Pigment Red 231 | 0.50 | Background | 76.2 | 6.4 | 13.9 | C |
| | Pigment Yellow 159 | 0.50 | Black Background | 75.8 | 6.3 | 13.4 | |
| Comparative example 3 | Pigment Red 231 | 0.10 | White Background | 83.6 | 4.6 | 15.3 | C |
| | Pigment Yellow 159 | 0.30 | Black Background | 83.6 | 4.6 | 15.3 | |
| Comparative example 4 | Pigment Red 231 | 0.17 | White Background | 83.0 | 3.8 | 17.3 | C |
| | Pigment Yellow 159 | 0.33 | Black Background | 67.1 | 2.6 | 14.5 | |
| Comparative example 5 | Not colored | - | White Background | 97.4 | -0.9 | 2.7 | C |
| | | | Black Background | 95.2 | -1.0 | 1.4 | |

## Claims

1. A dental implant abutment which is attached on the oral cavity inner side of an implant fixture embedded in a jawbone to be an artificial tooth root, and pierces a gingiva so as to be a base of an upper structural body, wherein the abutment is made of a ceramic added with a pigment and sintered so as to wholly have a similar color to that of the gingiva.

2. The dental implant abutment as claimed in claim 1,
wherein the similar color to that of the gingiva has L* of 60 to 85, a* of 9 to 20, and b* of -5 to 9 in an index of a color system of L*a*b*.

3. The dental implant abutment as claimed in claim 1 or 2,
wherein the abutment has a prosthesis fixing member at the oral cavity inner side of a part which pierces the gingiva.
